# EUROPEAN PATENT SPECIFICATION

(11) **EP 2 624 332 B1**
(45) Date of publication and mention of the grant of the patent: **09.09.2015**
(21) Application number: 13154075.9
(22) Date of filing: 05.02.2013
(51) Int. Cl.: H01M 2/10, H01M 2/34, H01M 2/36, B60L 3/00, B60L 3/04, B60L 11/18

(54) **Pouring structure for battery pack**
Gießstruktur für Batteriepacks
Structure de versement pour bloc-batterie

(30) Priority: 06.02.2012 JP 2012023100
(43) Date of publication of application: 07.08.2013
(73) Proprietor: Mitsubishi Jidosha Kogyo Kabushiki Kaisha, Tokyo 108-8410 (JP)
(72) Inventor: Kawamura, Hiroki, Tokyo, 108-8410 (JP); Kamiya, Yuji, Tokyo, 108-8410 (JP); Maeda, Akira, Tokyo, 108-8410 (JP); Takasaki, Seiichi, Tokyo, 108-8410 (JP); Honjo, Hideki, Tokyo, 108-8410 (JP); Inagaki, Masanori, Tokyo, 108-8410 (JP); Loo, Weng Leong, Tokyo, 108-8410 (JP); Taneda, Ryoji, Tokyo, 108-8410 (JP); Tozuka, Yuji, Tokyo, 108-8410 (JP)
(74) Representative: Vossius & Partner Patentanwälte Rechtsanwälte mbB

(56) References cited:
- EP-A1- 2 072 309
- EP-A1- 2 355 205

## Description

The present invention relates to pouring structures for battery packs, and more particularly, to a structure of this type with enhanced safety.

An electric vehicle is mounted with a battery pack for storing electric power and supplying an electric motor with the electric power. The battery pack is arranged under the floor of either a passenger compartment or luggage compartment of the electric vehicle so that required capacity may be secured for the luggage compartment or the passenger compartment.

EP 2 072 309A discloses a battery unit provided under a floor panel of an electric automobile, wherein the battery unit is provided with a battery case including a tray member and a cover member and electric components are contained in the battery case.

EP 2 355 205A discloses a battery system housing a battery assembly in an external case.

In case the battery pack catches fire, it is an effective way to pour water or fire extinguishing agent directly into the battery pack. JP-A-2011-65805 discloses a device in which when the battery pack (battery system) is put in an abnormal condition, a fire extinguishing agent is supplied from a charging device to the battery pack through a cooling system.

In the case of the battery pack disclosed in the patent publication, however, the fire extinguishing agent needs to be stored in the charging device, and moreover, only when the charging device is connected, the fire extinguishing agent can be supplied to the battery pack. Thus, pouring structures for battery packs have been under study in which the battery pack is provided with an inlet port that can be easily opened without the need for the operator to use a tool or the like so that in case of emergency such as battery pack fire, water or the like can be easily poured into the battery pack as quickly as possible regardless of whether the battery pack is being charged or not.

Meanwhile, the battery pack of an electric vehicle contains numerous electricity conducting components that conduct high-voltage electricity, as well as numerous electrically conductive components through which high-voltage electricity can possibly pass if the components constituting the battery package are damaged.

Thus, if the battery pack is provided with an inlet port that can be easily opened without the need to use a tool as stated above, an undesirable situation can possibly occur where, at the time of pouring water into the battery pack, the operator may carelessly insert his finger into the battery pack through the inlet port and touch the electricity conducting components or electrically conductive components inside the battery pack.

An object of the present invention is therefore to provide a pouring structure for a battery pack, which ensures both easy pouring of water into the battery pack and protection of an operator from high-voltage electric shock.

The object above can be achieved by the features specified in the claims. Particularly, the present invention provides a pouring structure for a battery pack mounted on an electric vehicle and containing a battery for supplying electric power to an electric motor which drives the electric vehicle, characterized by comprising:
a service plug having an electrically insulated structure, arranged inside the battery pack and configured to shut off a high-voltage circuit in the battery pack;
a manipulation hole formed in the battery pack and allowing the service plug to be manipulated; and
a closure member closing the manipulation hole and having an inlet port through which water can be poured, wherein:
   the service plug is arranged so as to face the inlet port of the closure member with a gap smaller than a preset value therebetween, and
   the closure member has a protrusion that makes the gap smaller than the preset value wherein the preset value has such dimension that an electric shock testing instrument (IPXXB probe) cannot be inserted into the gap.

The service plug having an electrically insulated structure faces the water pouring inlet port with a gap smaller than the preset value therebetween, and the closure member has the protrusion that makes the gap smaller than the preset value. Thus, the gap between the service plug and the inlet port can be reliably kept at a value smaller than the preset value, and even if the operator carelessly puts his finger in the inlet port, the finger cannot be inserted into the gap between the service plug and the inlet port, because the gap is small enough to prevent the insertion of the finger.

Preferably, the pouring structure further comprises an inlet port closure member configured to close the inlet port, and the closure member is fixed to a floor panel constituting the electric vehicle.

The closure member is fixed to the floor panel of the electric vehicle by a fastening member, and the inlet port of the closure member is closed with the inlet port closure member. It is therefore possible to open the inlet port by just removing the inlet port closure member, so that water can be readily poured into the battery pack.

Also preferably, the closure member is fixed to the battery pack, and the inlet port is formed as a fragile portion of the closure member.

Since the closure member is fixed to the battery pack by a fastening member and the inlet port is formed as a fragile portion of the closure member, the inlet port can be formed by breaking the fragile portion, whereby water can be readily poured into the battery pack.

The present invention will become more fully understood from the detailed description given hereinafter and the accompanying drawings which are given by way of illustration only, and thus, are not limitative of the present invention, and wherein:
FIG. 1 schematically illustrates an electric vehicle to which a pouring structure for a battery pack according to the present invention is applied;
FIG. 2 is a sectional view taken along line A-A in FIG. 1, illustrating a first embodiment of the present invention;
FIG. 3 is an enlarged view of part B in FIG. 1, illustrating a second embodiment of the present invention;
FIG. 4 is a sectional view taken along line C-C in FIG. 3;
FIG. 5 is a bottom view of a service plug cover according to the second embodiment of the present invention; and
FIG. 6 is a sectional view taken along line D-D in FIG. 5.

Embodiments of the present invention will be described below with reference to the drawings.

First, an electric vehicle to which a pouring structure for a battery pack according to the present invention is applied will be explained.

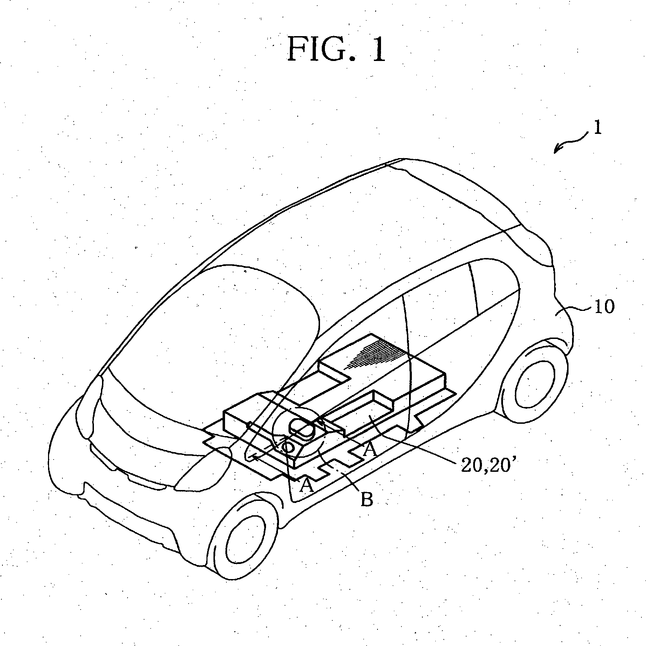

FIG. 1 schematically illustrates the electric vehicle to which the pouring structure of the present invention is applied.

The vehicle 1 to which the pouring structure according to the present invention is applied is an electric vehicle equipped with a traction motor (electric motor) as a traveling device of the vehicle 1. The traction motor is supplied with high-voltage electric power from a battery pack 20, 20' via a high-voltage circuit, and the operation of the traction motor is controlled by an inverter. The battery pack 20, 20' has a charging inlet lid to which an outlet cable extended from an external power supply is connected so that the battery pack 20, 20' can be charged by a battery charger.

The battery pack 20, 20' comprises a secondary battery such as a lithium-ion secondary battery. Specifically, the battery pack 20, 20' includes a plurality of battery modules each constituted by a plurality of battery cells and provided with a cell monitoring unit for monitoring the battery cells, a battery monitoring unit for monitoring the temperatures, states of charge, and the like of the battery modules on the basis of the outputs from the cell monitoring units, a service plug having an electrically insulated structure and configured to shut off a high-voltage circuit in the battery pack 20, 20' in case of emergency, electricity conducting components that conduct high-voltage electricity, and electrically conductive components through which high-voltage electricity can possibly pass if short circuit or the like occurs. These elements are contained in a battery pack case and a battery pack cover, both made of resin, to form a unit. The battery pack 20, 20' is arranged under a floor panel forming a lower part of a vehicle body 10 of the vehicle 1.

### [First Embodiment]

In the following, a pouring structure for a battery pack according to a first embodiment of the present invention will be described.

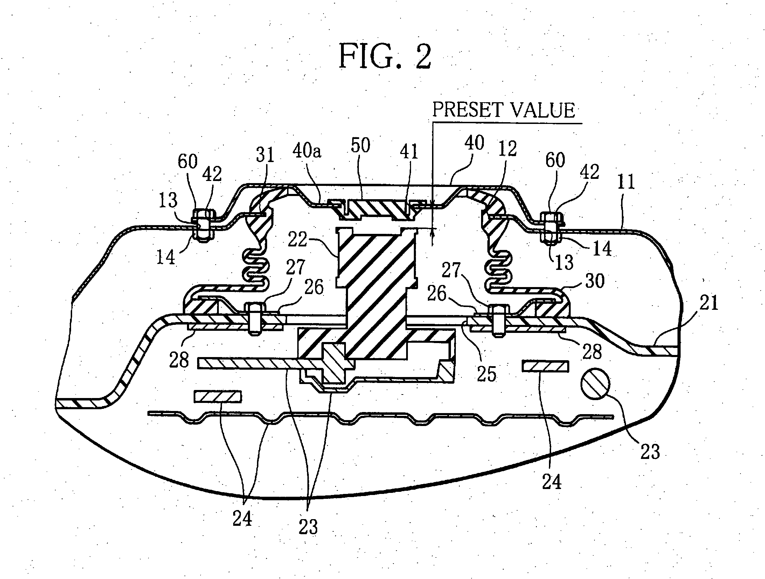

FIG. 2 is a sectional view taken along line A-A in FIG. 1 and illustrates the first embodiment of the present invention.

As illustrated in FIG. 2, the pouring structure which allows water to be poured into the battery back 20 in case of emergency generally comprises a floor panel 11, a battery pack cover 21 forming an upper part of the housing of the battery pack 20, a service plug 22, a connecting member 30, a service plug cover (closure member) 40, a plug (inlet port closure member) 50, and bolts 60.

Elements arranged inside the battery pack 20 include the service plug 22 having an electrically insulated structure and configured to shut off the high-voltage circuit in the battery pack 20 in case of emergency, electricity conducting components 23 that conduct high-voltage electricity, and electrically conductive components 24 through which high-voltage electricity can possibly pass if short circuit or the like occurs. An opening (manipulation hole) 25 is formed through the battery pack cover 21 of the battery pack 20 at a location corresponding to the service plug 22 such that the service plug 22 can project through the opening 25. That is, the service plug 22 is so arranged as to project from the opening 25 of the battery pack cover 21.

A service plug manipulation hole 12 is formed through the floor panel 11 at a location corresponding to the opening 25 of the battery pack cover 21 of the battery pack 20 mounted on the vehicle, such that the service plug 22 can be manipulated from inside the passenger compartment while the battery pack 20 is mounted on the vehicle. A plurality of mounting holes 13 are formed through the floor panel 11 to permit the bolts 60 for fixing the service plug cover 40 to be inserted therethrough. Nuts 14 associated with the respective bolts 60 are welded to regions around the respective mounting holes 13 of the floor panel 11 on the side external to the passenger compartment. The service plug cover 40 may be secured to the floor panel 11 without using the bolts 60 and the nuts 14. That is, the service plug cover 40 may be directly welded to the floor panel 11.

The connecting member 30 is a bellows-like member made of rubber and serves to absorb misalignment between the service plug manipulation hole 12 of the floor panel 11 and the opening 25 of the battery pack 20, and also to prevent water from entering the passenger compartment from the service plug manipulation hole 12 of the floor panel 11.

The service plug cover 40 is made of a thin metal plate. The service plug cover 40 has a protrusion 40a, which is a surface located at a central portion of the service plug cover 40 and protruding convexly toward the service plug 22, and a circular inlet port 41, which is formed in the protrusion 40a and through which water or the like is poured in case of emergency. The inner diameter of the inlet port 41 is smaller than the outer shape of the service plug 22 as viewed from above. The service plug cover 40 has a plurality of bolt holes 42 formed therein so that the bolts 60 for fixing the service plug cover 40 to the floor panel 11 can be inserted through the respective bolt holes 42.

The plug 50 is made of rubber. The plug 50 is fitted in the inlet port 41 of the service plug cover 40 and prevents foreign matter for entering the battery pack 20 from the interior of the passenger compartment.

The vertical dimensions of the floor panel 11 and service plug cover 40 and the vertical position of the battery pack 20 mounted on the vehicle body 10 are set such that when the service plug cover 40 is fixed to the floor panel 11 with the battery pack 20 mounted on the vehicle, the gap between the service plug 22 and the inner peripheral edge of the inlet port 41 formed in the service plug cover 40 is smaller than a preset value (e.g., 9.5 mm). In this embodiment, the preset value is set to 9.5 mm by way of example and may be set to a dimension such that an electric shock testing instrument (IPXXB probe) cannot be inserted into the gap.

The floor panel 11, the battery pack 20, the service plug 22, the connecting member 30, the service plug cover 40 and the plug 50, which are configured as stated above, are put together in the manner described below.

As illustrated in FIG. 2, the connecting member 30 is fixed to the battery pack cover 21 by plates 26, bolts 27 and plates 28, all made of an electrically conductive material, such that the interior of the connecting member 30 is in communication with the opening 25. The battery pack 20 is arranged under the floor panel 11 in such a manner that the opening 25 communicates with the interior of the connecting member 30 and the service plug manipulation hole 12 of the floor panel 11. Then, the inner peripheral edge of the service plug manipulation hole 12 of the floor panel 11 is inserted into an insertion groove 31 cut in the connecting member 30. The service plug cover 40 is fixed to the floor panel 11 by the bolts 60 such that the gap between the inner peripheral edge of the inlet port 41 of the service plug cover 40 and the service plug 22 is smaller than the preset value (e.g., 9.5 mm) and also that the service plug 22 faces the inlet port 41 of the service plug cover 40. Then, the plug 50 is fitted in the inlet port 41 of the service plug cover 40.

The following explains the operation and advantageous effects of the pouring structure according to the first embodiment of the present invention.

The inlet port 41 of the service plug cover 40 is formed so that the inner diameter thereof is smaller than the outer shape of the service plug 22 as viewed from above. Also, the vertical dimensions of the floor panel 11 and service plug cover 40 and the vertical position of the battery pack 20 mounted on the vehicle body 10 are set such that when the service plug cover 40 is fixed to the floor panel 11 with the battery pack 20 mounted on the vehicle, the gap between the service plug 22 and the inner peripheral edge of the inlet port 41 of the service plug cover 40 is smaller than the preset value (e.g., 9.5 mm). The service plug cover 40 is positioned relative to the battery pack cover 21 such that the service plug 22 faces the inlet port 41 of the service plug cover 40.

In this manner, the gap between the service plug 22 and the inner peripheral edge of the inlet port 41 of the service plug cover 40 is set so as to be smaller than the preset value (e.g., 9.5 mm) when the battery pack 20 is mounted on the vehicle, and in addition, the service plug cover 40 is positioned relative to the battery pack cover 21 such that the service plug 22 faces the inlet port 41 of the service plug cover 40. Thus, even if the operator carelessly puts his finger in the inlet port 41, the finger cannot be inserted into the gap between the service plug 22 and the inlet port 41, because the gap is small enough to prevent the insertion of the finger.

It is therefore possible to prevent the operator from touching the internal components of the battery pack 20, such as the electricity conducting components 23, the electrically conductive components 24, and the plates 26, bolts 27 and plates 28 made of an electrically conductive material, whereby safety can be enhanced.

Also, the inlet port 41 is formed in the service plug cover 40 and is closed with the plug 50 made of rubber.

Accordingly, when the vehicle 1 is put in an emergency situation, the plug 50 can be removed without using a tool, so that water can be readily poured into the battery pack 20.

### [Second Embodiment]

A pouring structure for a battery pack according to a second embodiment of the present invention will be described below.

According to the second embodiment, a service plug cover 80 is formed as an integral part of the battery pack 20', unlike the first embodiment. In the following, differences between the configuration of the battery pack 20' and that of the counterpart of the first embodiment will be explained.

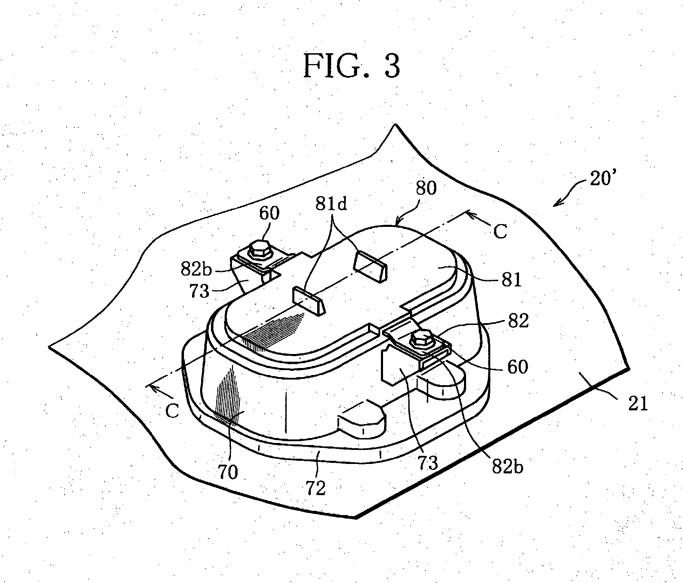

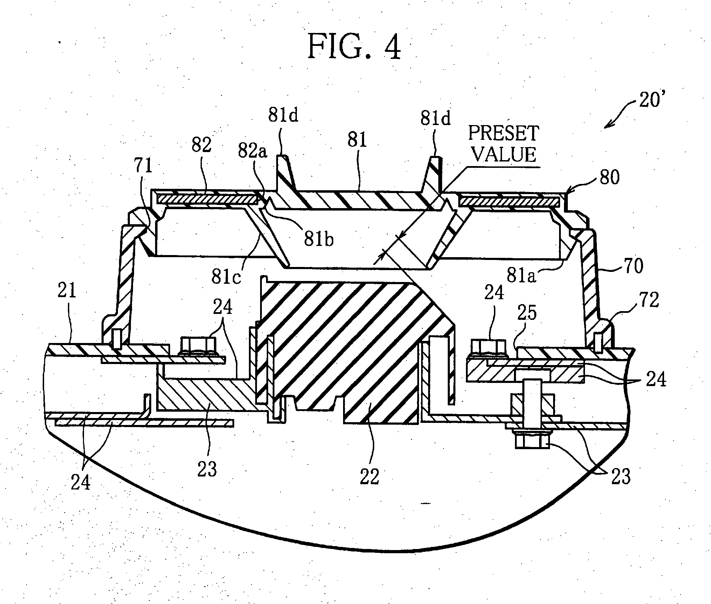

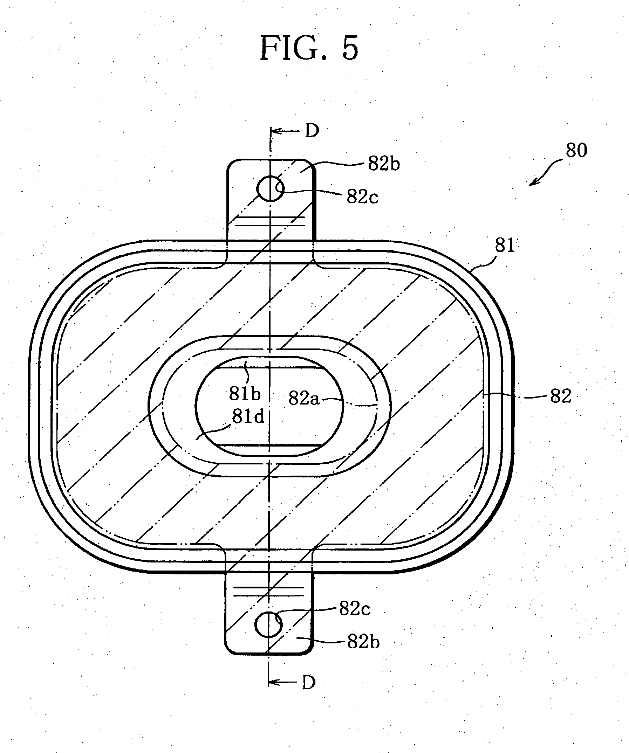

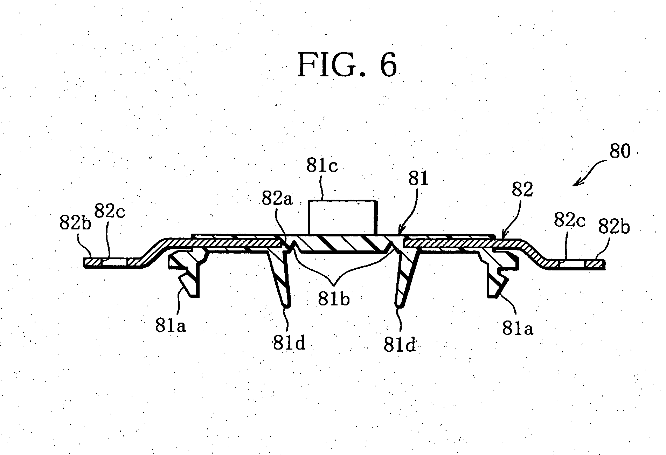

FIG. 3 is an enlarged view of part B in FIG. 1 and illustrates the second embodiment of the present invention, FIG. 4 is a sectional view taken along line C-C in FIG. 3, and FIG. 5 is a bottom view of the service plug cover according to the second embodiment of the present invention. In FIG. 5, the hatched region indicates a core member 82 partly embedded in a resin member 81. FIG. 6 is a sectional view taken along line D-D in FIG. 5.

As illustrated in FIG. 3, the battery pack 20' generally comprises the battery pack cover 21, the service plug 22, the electricity conducting components 23, the electrically conductive components 24, a service plug cover mounting member (closure member) 70, and the service plug cover (closure member) 80.

Elements arranged inside the battery pack 20' include, as in the first embodiment, the service plug 22 having an electrically insulated structure and configured to shut off the high-voltage circuit in the battery pack 20' in case of emergency, the electricity conducting components 23, and the electrically conductive components 24.

As seen from FIGS. 3 and 4, the service plug cover mounting member 70 is made of resin. The service plug cover mounting member 70 has a generally rectangular sectional shape as viewed from below and has a tubular configuration such that the opening area of the upper portion is smaller than that of the lower portion. Also, the service plug cover mounting member 70 has claws 71 protruding inward from the inner periphery of the upper portion thereof and engaging with the service plug cover 80, and a flange 72 formed on the outer periphery of the lower portion thereof and having engaging portions, not shown, engaged with the battery pack cover 21. Further, the service plug cover mounting member 70 has engaging portions 73 formed on both sides thereof and engaged with the service plug cover 80.

As illustrated in FIGS. 4 to 6, the service plug cover 80 is configured such that the core member 82 made of a thin metal plate is partly embedded in the resin member 81.

The core member 82 is made of a thin metal plate having a generally rectangular shape as viewed from above. The core member 82 has a generally rectangular hole 82a formed in a central portion thereof. Also, the core member 82 has mounting portions 82b projecting from respective opposite sides thereof to permit the service plug cover 80 to engage with the service plug cover mounting member 70. Each mounting portion 82b has a bolt hole 82c formed therein for insertion of the bolt 60. Instead of screwing the bolts 60 into the respective engaging portions 73, the service plug cover 40 may be fixed to the service plug cover mounting member 70 by welding the mounting portions 82b of the service plug cover 40 to the respective engaging portions 73 of the service plug cover mounting member 70.

The resin member 81 has a generally rectangular shape as viewed from above. The resin member 81 has engaging portions 81a formed at an outer peripheral portion of a lower surface thereof for engagement with the claws 71 of the service plug cover mounting member 70. Also, the resin member 81 has a wedge-like cut (inlet port, fragile portion) 81b formed in a central portion of the lower surface thereof. The cut 81b has an inverted V-like sectional shape and has an inner perimeter that fits into the hole 82a of the core member 82. Further, the resin member 81 has a hollow protrusion 81c protruding downward from the lower surface thereof and having an elliptic sectional shape. An upper portion of the protrusion 81c has an inner perimeter into which the outer perimeter of the cut 81b fits. A lower end portion of the protrusion 81c has an inner perimeter such that the lower end portion does not jut out from the outer shape of the service plug 22 as viewed from above. Further, the resin member 81 has a pair of lugs 81d projecting upward from the upper surface thereof and located inside the inner perimeter of the cut 81b.

In an emergency situation, the lugs 81d are pulled up to tear the service plug cover 80 along the cut 81b, thus forming an inlet port through which water can be poured.

The vertical dimension of the service plug cover mounting member 70 and the vertical dimension of the protrusion 81c of the service plug cover 80 are set such that after the service plug cover mounting member 70 and the service plug cover 80 are attached to the battery pack cover 21, the gap between the service plug 22 and the lower end of the protrusion 81c of the service plug cover 80 is smaller than a preset value (e.g., 9.5 mm). In this embodiment, the preset value is set to 9.5 mm by way of example and may be set to a dimension such that an electric shock testing instrument (IPXXB probe) cannot be inserted into the gap.

In the battery pack 20' thus configured, the service plug cover mounting member 70 is fixed to the battery pack cover 21 and then the service plug cover 80 is fixed to the service plug cover mounting member 70 with the bolts 60 screwed into the mounting portions 82b of the service plug cover 80, as illustrated in FIGS. 3 and 4, such that the gap between the service plug 22 and the lower end of the protrusion 81c of the service plug cover 80 is smaller than the preset value (e.g., 9.5 mm) and also that the service plug 22 faces the lower end of the protrusion 81c of the service plug cover 80. The battery pack 20' is arranged under the floor panel 11 such that when viewed from above, the service plug cover 80 is located in the same position as the service plug manipulation hole 12 of the floor panel 11.

The following explains the operation and advantageous effects of the pouring structure according to the second embodiment of the present invention.

The protrusion 81c of the service plug cover 80 is formed such that the inner perimeter of the lower end thereof is smaller than the outer shape of the service plug 22 as viewed from above. Also, the vertical dimension of the service plug cover mounting member 70 and the vertical dimension of the protrusion 81c of the service plug cover 80 are set such that after the service plug cover mounting member 70 and the service plug cover 80 are attached to the battery pack cover 21, the gap between the service plug 22 and the lower end of the protrusion 81c of the service plug cover 80 is smaller than the preset value (e.g., 9.5 mm). The service plug cover mounting member 70 and the service plug cover 80 are positioned relative to the battery pack cover 21 such that the lower end of the protrusion 81c of the service plug cover 80 and the service plug 22 face each other.

In this manner, the gap between the service plug 22 and the lower end of the protrusion 81c of the service plug cover 80 is set so as to be smaller than the preset value (e.g., 9.5 mm), and in addition, the service plug cover mounting member 70 and the service plug cover 80 are positioned relative to the battery pack cover 21 such that the lower end of the protrusion 81c of the service plug cover 80 faces the service plug 22. Thus, even if the operator carelessly puts his finger in the inlet port which is formed by pulling up the lugs 81d and breaking the service plug cover 80 along the cut 81d, the finger cannot be inserted into the gap between the service plug 22 and the inlet port, because the gap is small enough to prevent the insertion of the finger.

It is therefore possible to prevent the operator from touching the electricity conducting components 23 or electrically conductive components 24 arranged in the battery pack 20', whereby safety can be enhanced.

Also, the inlet port through which water is poured is formed by pulling up the lugs 81d and tearing the service plug cover 80 along the cut 81d.

Accordingly, when the vehicle 1 is put in an emergency situation, water can be readily poured into the battery pack 20' without the need to use a tool.

## Claims

1. A pouring structure for a battery pack (20, 20') mounted on an electric vehicle (1) and containing a battery for supplying electric power to an electric motor which drives the electric vehicle, **characterized by** comprising:
a service plug (22) having an electrically insulated structure, arranged inside the battery pack and configured to shut off a high-voltage circuit in the battery pack;
a manipulation hole (25) formed in the battery pack and allowing the service plug to be manipulated; and
a closure member (40, 70, 80) closing the manipulation hole and having an inlet port (41, 81b) through which water can be poured, wherein:
the service plug is arranged so as to face the inlet port of the closure member with a gap smaller than a preset value therebetween, and
the closure member (40, 70, 80) has a protrusion (40a, 81c) that makes the gap smaller than the preset value, wherein the preset value has such dimension that an electric shock testing instrument which is an IPXXB probe cannot be inserted into the gap.

2. The pouring structure according to claim 1, **characterized by** further comprising:
an inlet port closure member (50) configured to close the inlet port (41), and
wherein the closure member (40) is fixed to a floor panel (11) constituting the electric vehicle (1).

3. The pouring structure according to claim 1, **characterized in that**:
the closure member (70, 80) is fixed to the battery pack (20'), and
the inlet port (81b) is formed as a fragile portion of the closure member (80).

## Patentansprüche

1. Gießstruktur für eine Batteriepackung (20, 20'), der an einem Elektrofahrzeug (1) angebracht ist und eine Batterie zur Lieferung von elektrischen Strom an einen Elektromotor enthält, der das Elektrofahrzeug antreibt, **dadurch gekennzeichnet, dass** sie aufweist:
einen Servicestopfen (22), der einen elektrisch isolierten Aufbau aufweist, der innerhalb der Batteriepackung angeordnet und konfiguriert ist, einen Hochspannungsschaltkreis in der Batteriepackung abzuschalten;
ein Betätigungsloch (25), das in der Batteriepackung ausgebildet ist und es ermöglicht, dass der Servicestopfen betätigt wird; und
ein Verschlusselement (40, 70, 80), das das Betätigungsloch verschließt und eine Einlassöffnung (41, 81b) aufweist, durch die Wasser gegossen werden kann, wobei:
der Servicestopfen so angeordnet ist, dass er der Einlassöffnung des Verschlusselements mit einem Spalt dazwischen gegenüberliegt, der kleiner als ein vorgegebener Wert ist, und
das Verschlusselement (40, 70, 80) einen Vorsprung (40a, 81c) aufweist, der den Spalt kleiner als den vorgegebenen Wert macht, wobei der vorgegebene Wert eine solche Abmessung aufweist, dass ein Stromschlag-Prüfinstrument, das eine IPXXB-Sonde ist, nicht in den Spalt eingeführt werden kann.

2. Gießstruktur nach Anspruch 1, **dadurch gekennzeichnet, dass** sie ferner aufweist:
ein Einlassöffnungs-Verschlusselement (50), das konfiguriert ist, die Einlassöffnung (41) zu verschließen, und
wobei das Verschlusselement (40) an einem Bodenblech (11) des Elektrofahrzeugs (1) befestigt ist.

3. Gießstruktur nach Anspruch 1, **dadurch gekennzeichnet, dass**:
das Verschlusselement (70, 80) an der Batteriepackung (20') befestigt ist, und
die Einlassöffnung (81b) als ein zerbrechlicher Abschnitt des Verschlusselements (80) ausgebildet ist.

## Revendications

1. Structure de versement pour un bloc-batterie (20, 20') monté sur un véhicule électrique (1) et contenant une batterie destinée à alimenter en courant électrique un moteur électrique entraînant le véhicule électrique, **caractérisée en ce qu'**elle comprend :
une prise de service (22) ayant une structure électriquement isolée, disposée à l'intérieur du bloc-batterie et prévue pour couper un circuit haute-tension du bloc-batterie ;
un trou de manipulation (25) formé dans le bloc-batterie et permettant la manipulation de la prise de service ; et
un élément de fermeture (40, 70, 80) obturant le trou de manipulation et ayant un orifice d'entrée (41, 81b) par où de l'eau peut être versée, où :
la prise de service est disposée de manière à faire face à l'orifice d'entrée de l'élément de fermeture avec un interstice les séparant inférieur à une valeur définie, et où l'élément de fermeture (40, 70, 80) présente une saillie (40a, 81c) rendant l'interstice inférieur à la valeur définie,
la valeur définie ayant une dimension ne permettant pas à un instrument de test de décharge électrique qui est un doigt IPXX d'être inséré dans l'interstice.

2. Structure de versement selon la revendication 1, **caractérisée en ce qu'**elle comprend en outre :
un élément de fermeture (50) d'orifice d'entrée prévu pour obturer l'orifice d'entrée (41), et
**en ce que** l'élément de fermeture (40) est fixé à un panneau de plancher (11) constituant le véhicule électrique (1).

3. Structure de versement selon la revendication 1, **caractérisée en ce que** :
l'élément de fermeture (70, 80) est fixé au bloc-batterie (20'), et
l'orifice d'entrée (81b) est formé comme partie fragile de l'élément de fermeture (80).
